Europäisches Patentamt

European Patent Office

Office européen des brevets

(11) Publication number: **0 253 480**
**A2**

## EUROPEAN PATENT APPLICATION

(21) Application number: **87304771.6**

(22) Date of filing: **29.05.87**

(51) Int. Cl.4: **B01D 53/34**

(30) Priority: **16.06.86 US 874706**

(43) Date of publication of application:
**20.01.88 Bulletin 88/03**

(84) Designated Contracting States:
**AT BE CH DE FR GB IT LI LU NL SE**

(71) Applicant: **Smith, Wallace B.**
**100 Cherokee Drive**
**Trusville Alabama 35173(US)**

Applicant: **Dan, V. Giovanni**
**5554 Claremont Avenue**
**Oakland California 94618(US)**

(72) Inventor: **Smith, Wallace B.**
**100 Cherokee Drive**
**Trusville Alabama 35173(US)**
Inventor: **Dan, V. Giovanni**
**5554 Claremont Avenue**
**Oakland California 94618(US)**

(74) Representative: **Ablett, Graham Keith et al**
**F.J. Cleveland & Company 40-43 Chancery**
**Lane**
**London WC2A 1JQ(GB)**

(54) Process for removal of particulates and SO2 from combustion gases.

(57) This invention relates to a process for removing particulate and $SO_2$ pollutants from flue gases from a coal fired boiler (10). The process comprises the steps of removing particulates from the flue gas by means of an electrostatic precipitator (14) or a fabric filter; a sulphur reacting solvent material (17) is then injected into the flue gas (18) before filtering through a fabric filter (19) to remove the sulphur by-product and the unreacted sorbent material from the flue gas. The exhaust is then discharged (23) to a stack.

FIG.1

## "PROCESS FOR REMOVAL OF PARTICULATES AND SO₂ FROM COMBUSTION GASES"

This invention pertains to methods for removal of pollution from the exhaust gas stream of combustion sources. More particularly, the invention relates to an improved method of elimination of particulate matter, sulfur dioxide ($SO_2$) and volatile toxic materials from the flue gas of coal fired boilers, especially in large electric generating plants.

Because of increasing public concern over deterioration of the environment, industries are being required by current and anticipated regulations to limit the emission of particulate matter, toxic materials (e.g., volatile metals or organic materials), and precursors to acid rain ($SO_x$, $NO_x$) into the atmosphere. Unfortunately, many processes for controlling these pollutants are either unproven or expensive. Known $SO_2$ removal and collecting processes include wet scrubbers, spray driers, and dry furnace sorbent injection. Modern methods of collecting particulates include fabric filters (baghouses), electrostatic precipitators, and wet scrubbers. Methods of collecting volatile toxic materials are not well established, but are generally based on scrubber or filter technology. A discussion of each of these systems follows.

In wet flue gas desulfurization systems, also called wet scrubbers, small droplets of slurry containing water and alkaline material are sprayed into the flue gas, where it reacts with $SO_2$ and the reacted products are collected together as a liquid. Wet scrubbers have high collection efficiency and are the only systems considered commercially available for over 90% $SO_2$ removal on boilers firing high sulfur fuels. This system has the disadvantages of large capital costs, high maintenance costs, and the need to dispose of the solid wastes produced by the process. Also, wet scrubbers may emit a significant plume of evaporation residue and $H_2SO_4$ into the atmosphere.

Spray driers are another system of sulfur removal, wherein fine droplets of slurry are sprayed into the flue gas to react with $SO_2$ and then evaporate to become airborne solid particulate residue. This residue is then collected in a baghouse in which the flue gas is filtered for removal of particulates. Spray dryers are lower cost than wet scrubbers, and generate less sludge, but their performances may not be adequate for high-sulfur fuels. Furthermore, disposal is complicated by the addition of sorbent to the collected ash particulates. Also, the flue gas temperature is lowered dramatically by the evaporation of water which may lead to corrosion of baghouse components. Water consumption by spray dryer processes are nearly equivalent to those for wet scrubbers.

Dry sorbent injection is a third method of sulfur removal. An alkaline powder is blown into the flue gas and reacts with the $SO_2$. The reactants are then collected in an electrostatic precipitator or baghouse, where the sorbent may react further with the $SO_2$. The capital cost of such a system is significantly lower than that for scrubbers or spray dryers. However, the $SO_2$ removal efficiency is lower than for wet scrubbers and spray dryers.

The predominant system of particulate removal at coal fired power plants is the electrostatic precipitator (ESP). An ESP consists of a series of pairs of electrodes maintained at a high voltage difference within a gas passage for ionizing the air. As dust or ash laden passes between the electrodes, the particles are also ionized and move in the electrical fields to be collected on one of the electrodes. The material that is collected is periodically dumped into hoppers by mechanical means and removed to a disposal site. ESPs have been selected as the particulate removal means in the past due to their low cost. However, with more stringent removal requirements, alternate technologies have become competitive, since ESPs are extremely sensitive to dust properties (i.e., coat types).

Baghouses consists of an array of tubular fabric filterbags within a large housing through which flue gas containing dust or ash is drawn by a large fan. The filterbags are cleaned periodically by reversing the gas flow and/or shaking. The particles are collected in hoppers for disposal. Baghouses are relatively insensitive to the properties of the particulates and have a very high collection efficiency.

Wet scrubbers may also be utilized to remove particulates, but more energy is required than for sulfur removal. At present, scrubbers are not efficient enough to compete with ESPs and baghouses.

Many toxic materials, such as lead, selenium, arsenic, etc. have the property that they are in vapor phase at flue gas temperatures, but condense at atmospheric temperatures to become solid or liquid particles, a form potentially hazardous to human health. As vapors, these materials may pass through baghouses and precipitators virtually unaffected. In scrubbers, they condense because of the lower temperatures and then pass through as solid or liquid particles because of the low collection efficiency. The common means of collecting such materials is to reduce the flue gas temperature by some means, condense the material to particulate form, and then collect it in ESPs or baghouses. This can be done by using "wet" ESPs wherein water is sprayed into the inter-electrode space to cool the gas, or in regular ESPs and baghouses by preceding them with spray towers or heat exchangers to lower the temperature of the flue gas and cause the vapors to condense. These techniques waste heat energy if water is used and may cause low-temperature corrosion in downstream components if either water of heat exchangers are used.

The present invention is a process which comprises the removal of fly ash particulate matter from the flue gas of a coal fired combustion boiler, then using fabric filters to remove the SO$_2$ by the injection of dry sorbent into the flue gases prior to entering the baghouse. If the combustion gas is cooled before entering the baghouse, volatile toxic materials are removed as well.

More specifically, the flue gas exiting from a boiler which uses coal as a fuel is directed to an electrostatic precipitator (ESP), then the particulate matter, principally coal fly ash, is collected in an ESP. Dry sodium based or calcium based sorbent powders are injected into the relatively particle-free flue gas between the ESP and a baghouse to react with the SO$_2$. The sorbent/SO$_2$ product and unreacted sorbent are collected on the filter bags where reaction and collection of SO$_2$ continue to occur. The material collected on the filter bags is removed periodically in the normal fashion, but because it contains relatively minute amounts of dust or ash, it could be routed to disposal facilities, recycled, or regenerated more conveniently and much more economically.

With incorporation of heat extraction, energy may be advantageously recovered which is normally lost in conventional systems either due to water injection for enhanced SO$_2$ removal or merely by being vented to the atmosphere. This energy savings may be sufficient to offset a large part of the cost of the entire process.

Since the reactant sorbent is injected into the flue gas before the temperature is reduced, in some embodiments, the corrosive elements of the flue gas, such as sulfuric acid, are neutralized, and low-temperature corrosion is not a problem. Further, since the injected sorbent material contains fewer submicron particles than fly ash, the baghouse size, and hence cost, could be significantly reduced relative to currently used baghouses.

Furthermore, the high collection efficiency of the fabric filter will serve to augment the collection of fly ash particles in cases where the performance of ESPs are marginal or emissions limits are exceeded. The fabric filter would be the final emissions control device in the combustion flow path, thereby assuring a clear stack independent of coal selection.

Therefore, it is an object of the present invention to provide a more economical process for removal of pollutants from the exhaust flue gas stream of a coal fired boiler.

It is a further object of the invention to provide an SO$_2$ removal process which enables the recycling of sorbent uncontaminated by dust or ash.

These and other objects and advantages will appear from the following description with reference to the drawings.

Fig. I is a schematic diagram illustrating a first embodiment of the invention.

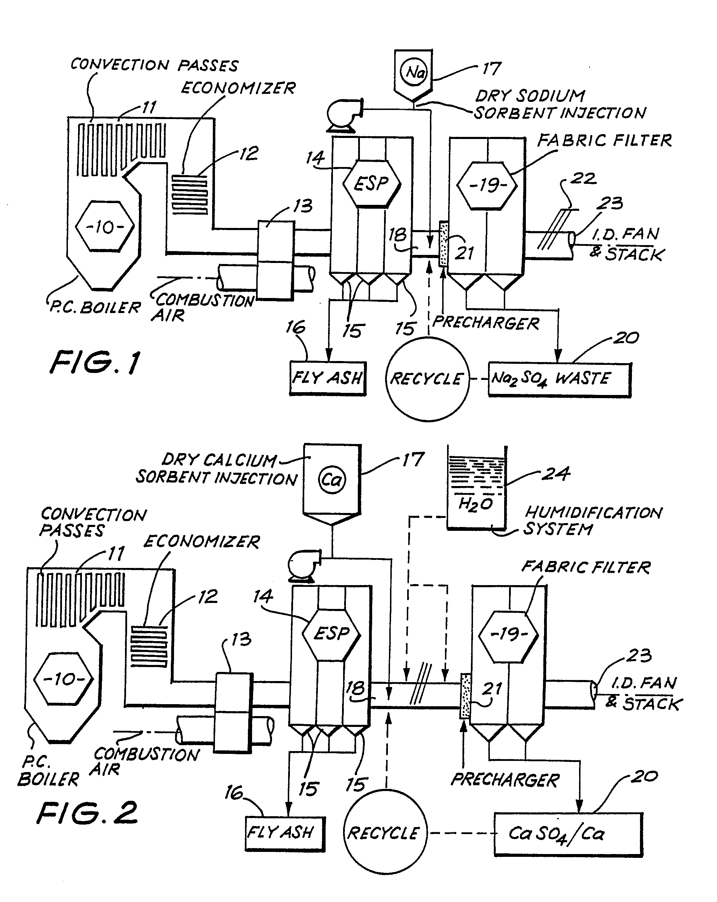

Fig. 2 is a schematic diagram illustrating a second embodiment of the invention.

The preferred embodiments are now described with reference to the drawings, in which like numbers indicate like parts throughout the figures.

Fig. I is a schematic drawing showing the steps of the process of this invention utilizing sodium based reactants. The exhaust train of a coal fired combustion boiler I0 is shown, whereby the flue gases exiting from the boiler first move through commonly used convection passes II, economizer I2, and combustion air preheater I3. The flue gases are then directed into electrostatic precipitator I4, which removes particulate ash and dust in the well known manner. Typically, ninety percent or more of the particulates are removed from the flue gases. These particulates are collected as fly ash in the hoppers I5, and removed by the fly ash handling system I6. Normally, such fly ash may be either utilized for productive purposes, such as making concrete, or is disposed of in ash ponds specifically designated and permitted for this purpose.

Processes which remove SO$_2$ as part of the particulate removal process will result in combined alkali-fly ash wastes. Such combined wastes will cause disposal difficulties, especially in retrofit situations, since normal ashponds may not be suitable or would require modification to comply with other environmental laws. Furthermore, the combined product may also preclude independent sale of the fly ash.

Dry sodium-based sorbents I7, such as sodium bicarbonate, are blown into the flue gases I8, after exiting the ESPI4. The sorbent reacts with the SO$_2$ in the flue gases, forming Na$_2$SO$_4$ byproducts and unreacted sorbent material. The material collected 20 in the fabric filter I9 is then either disposed, processed or recycled independent of the coal fly ash.

The collection of spent sorbent in the absence of fly ash permits the operation of the fabric filters I9 at relatively high air-to-cloth ratios (A/C), reducing the size and cost of the process equipment. In addition, with electrostatic enhancement, it may be desirable to utilize a fabric filter designed for and operated at A/C ratios considerably above conventional practice, i.e., at A/C≫ 2.0 acfm/ft². If so, an optional precharger 2l may be used to provide a supplemental charge to the sorbent to increase the porosity of the cake collected on the filter.

A low temperature heat recovery device 22 is another means of saving energy and may be located at the flue gas outlet of the fabric filter, prior to the flue gases being discharged 23 to the stack.

Fig. 2 shows a second embodiment of the present invention, design to be utilized with calcium based sorbents, such as calcium oxide. The main elements of the process are the same. However, the heat extraction device 22 is located between the ESP and the fabric filters to lower the temperature of the combined flue gas-sorbent stream. Operation at lower temperatures, approaching the temperature for moisture saturation of the flue gas, is favorable for SO₂ removal by calcium-based sorbents, and improves the utilization of the sorbent, thereby lowering operating costs.

The sorbent will also combine with SO₃ and permit operation at the lower flue gas temperature without concern for H₂SO₄ deposition and corrosion. Operation at lower flue gas temperatures also enhances toxic material removal.

The application of the heat extraction device 22, a humidification system 24, or a combination thereof at the point of sorbent injection and before the fabric filter also provides for a further reduction in the size of the fabric filter and the accompanying cost savings. If the recovered heat energy could be utilized at the power plant it would result in cost savings which would more than offset the operating costs of the other components of the process.

While this invention has been described in detail with particular reference to the preferred embodiments thereof, it will be understood that variations and modifications can be effected within the spirit and scope of the invention as previously described and as defined in the claims.

## Claims

l. A process for removing pollutants, including particulates and SO₂, from coal fired boiler flue gases, comprising the steps of:
removing the particulates from the flue gas;
then injecting dry sodium-based sulfur reacting sorbent material into the flue gas;
then filtering the flue gas through a fabric filter to remove the sulfur byproduct and the unreacted sorbent material from the flue gas; and
then exhausting said flue gas to a stack.

2. The process of Claim l which further comprises the step of electrostatically enhancing the sorbent material just prior to said flue gas filtering step.

3. A process for removing pollutants, including particulates and SO₂, from coal fired boiler flue gases, comprising the steps of:
removing the particulates from the flue gas;
then injecting dry calcium based sulfur reacting sorbent material into the flue gas;
then filtering the flue gas through a fabric filter to remove the sulfur byproduct and the unreacted sorbent material from the flue gas; and
then exhausting said flue gas to a stack.

4. The process of Claim 3 which further comprises the step of cooling the flue gases to just above the saturation temperature after said particulates removal step and prior to said flue gas filtering step.

5. The process of Claim 3 which further comprises the step of cooling the flue gases to less than 20°F above the saturation temperature after said particulates removal step and prior to said flue gas filtering step.

6. The process of Claim 4 whereas said cooling step is accomplished by heat exchange means.

7. the process of Claim 4 whereas said cooling step is accomplished by humidification means.

8. The process of Claim 3 which further comprises the step of electrostatically enhancing the sorbent material just prior to said flue gas filtering step.

9. The process of Claim 4 which further comprises the step of electrostatically enhancing the sorbent material just prior to said flue gas filtering step.

CONVECTION PASSES
ECONOMIZER
11
12
14
ESP
18
-10-
13
P.C. BOILER
COMBUSTION AIR
16
15
15
Na 17
DRY SODIUM SORBENT INJECTION
FABRIC FILTER
-19-
22
23
I.D. FAN & STACK
21
PRECHARGER
20
FLY ASH
RECYCLE
$Na_2SO_4$ WASTE

FIG.1

DRY CALCIUM SORBENT INJECTION
Ca 17
$H_2O$ 24
HUMIDIFICATION SYSTEM
CONVECTION PASSES
ECONOMIZER
11
12
14
ESP
18
-10-
13
P.C. BOILER
COMBUSTION AIR
16
15
15
FABRIC FILTER
-19-
23
I.D. FAN & STACK
21
PRECHARGER
20
FLY ASH
RECYCLE
$CaSO_4/Ca$

FIG.2